# EUROPEAN PATENT SPECIFICATION

(11) **EP 4 454 784 B1**
(45) Date of publication and mention of the grant of the patent: **10.06.2026**
(21) Application number: 24171586.1
(22) Date of filing: 22.04.2024
(51) Int. Cl.: B22D 21/00, B22D 21/04, C22C 1/02, C22C 21/02, B22D 15/02, C22F 1/043

(54) **METHOD FOR PRODUCING ALUMINUM-ALLOY CYLINDER BLOCK**
VERFAHREN ZUR HERSTELLUNG EINES ALUMINIUMLEGIERUNGS-ZYLINDERBLOCKS
PROCÉDÉ DE FABRICATION D'UN BLOC-CYLINDRES EN ALLIAGE D'ALUMINIUM

(30) Priority: 27.04.2023 JP 2023073324
(43) Date of publication of application: 30.10.2024
(73) Proprietor: Yamaha Hatsudoki Kabushiki Kaisha, Shizuoka-ken 438-8501, (JP)
(72) Inventor: Owada, Atsushi, Iwata-shi, Shizuoka-ken, 438-8501 (JP)
(74) Representative: Grünecker Patent- und Rechtsanwälte PartG mbB

(56) References cited:
- EP-A1- 2 097 634
- WO-A1-2004/002658
- JP-A- 2001 214 228
- US-A- 5 290 373
- US-A- 5 845 560
- US-A1- 2008 163 846

## Description

### BACKGROUND

### 1. Technical Field:

The present invention relates to a method for producing an aluminum-alloy cylinder block, and more particularly to a method for producing a cylinder block that is made of an aluminum-silicon alloy having a hypereutectic composition.

### 2. Description of the Related Art:

In recent years, in an attempt to reduce the weight of internal combustion engines, there has been a trend to use an aluminum alloy for cylinder blocks. Since a cylinder block is required to have high abrasion resistance, aluminum alloys which contain a large amount of Si, i.e., aluminum-silicon alloys having a hypereutectic composition, are expected to be promising aluminum alloys for cylinder blocks. In a cylinder block composed of an aluminum-silicon alloy, silicon crystal grains located on the slide surface will contribute to the improvement of abrasion resistance. Cylinder blocks made of an aluminum-silicon alloy are disclosed in International Publication No. 2004/002658 (hereinafter "Patent Document 1"), for example.
US20080163846 A discloses an engine component composed of an aluminum alloy containing silicon.
EP2097634 A relates to an internal combustion engine component composed of an aluminum alloy containing silicon.
JP2001214228 A discloses a diecast cylinder block made of an eutectic Al-Si alloy. US5290373 A discloses an evaporable foam casting system utilizing an aluminum-silicon alloy containing a high magnesium content.
US5845560 relates to a swash-plate type compressor with an abrasion resistant projecting portion on the cylinder block made of aluminum alloy.

### SUMMARY

Recently, with the increase in environmental awareness, various efforts have been made to achieve carbon neutrality. The applicant is actively promoting the use of recycled materials of aluminum alloys to contribute to the realization of carbon neutrality.

However, according to studies by the inventor, using a recycled material when producing a cylinder block that is made of an aluminum-silicon alloy having a hypereutectic composition may result in a reduced seizure resistance of the cylinder block.

Embodiments of the present invention have been made in view of the above problems, and an objective thereof is to suppress deteriorations in the seizure resistance of an aluminum-alloy cylinder block that is produced by using a recycled material.
The subject matter of the invention is as set out in the appended claims.

A production method according to the present invention includes step B of obtaining a melt by using a recycled material of an aluminum alloy containing not less than 12 mass% and not more than 20 mass% of Si (i.e., an aluminum-silicon alloy having a hypereutectic composition) as at least a portion of a raw material, such that the melt obtained in step B has an Ni content ratio of less than 0.05 mass%. Because this suppresses generation of an intermetallic compound that contains Ni within the produced cylinder block, deteriorations in the seizure resistance of the cylinder block are suppressed.

From the standpoint of suppressing deteriorations in seizure resistance, it is more preferable that the melt obtained in step B has a Zn content ratio of not more than 0.3 mass%.

Providing a recycled material having an Ni content ratio of not more than 0.1 mass% at step A makes it easy for the melt obtained in step B to have an Ni content ratio of less than 0.05 mass%.

When the melt contains Cu, an improved strength after the heat treatment can be obtained. The melt may have a Cu content ratio of not less than 3.0 mass% and not more than 5.0 mass%, for example.

Step B may include step b1 of obtaining a primary melt by melting at least the recycled material and step b2 of subjecting the primary melt to a component analysis. This allows for determining whether the Ni content ratio in the primary melt is less than 0.05 mass%, thereby making it easier to keep the Ni content ratio in the finally-obtained melt under control at step B.

According to the present invention, deteriorations in the seizure resistance of an aluminum-alloy cylinder block that is produced by using a recycled material are suppressed.

### BRIEF DESCRIPTION OF THE DRAWINGS

FIG. **1** **is** a perspective view schematically showing a cylinder block **100** that may be produced by a production method according to an embodiment of the present invention.
FIG. **2** is a plan view schematically showing enlarged a slide surface of the cylinder block **100.**
FIG. **3** is a flowchart of a production method according to an embodiment of the present invention.
FIG. **4** is a graph showing evaluation results of seizure characteristics for cylinder blocks of Prototype Examples 1 and 2.
FIG. **5** is a graph showing calculation results of the proportion of a liquid phase in a virgin material and a recycled material.
FIG. **6** is a graph showing calculation results of the composition of a liquid phase in a recycled material.
FIG. **7** is a graph showing DSC curves during temperature elevation of a virgin material and a recycled material.
FIG. **8** is a graph showing calculation results of the proportion of a liquid phase in a recycled material having a composition shown in Table 5 (with an Ni content ratio of 0.1 mass% and a Zn content ratio of 0.3 mass%).
FIG. **9** **is** a flowchart showing another implementation of step **S2** of obtaining a melt.

### DETAILED DESCRIPTION

Hereinafter, embodiments of the present invention will be described with reference to the drawings. Note that the present invention is not limited to the following embodiments.

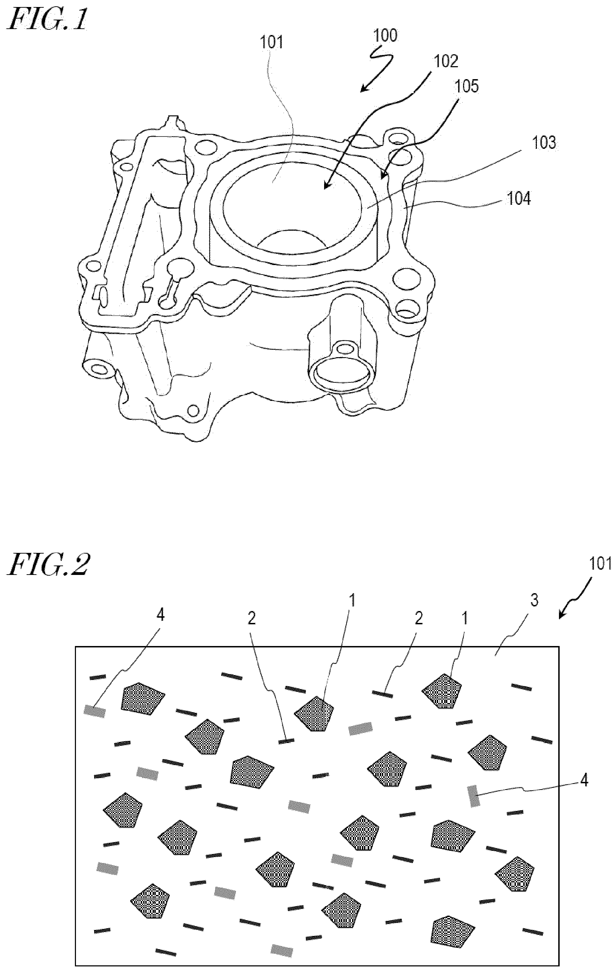

First, an example of a cylinder block that is produced by a production method according to an embodiment of the present invention will be described. With the production method according to an embodiment of the present invention, for example, a cylinder block **100** shown in FIG. **1** may be produced.

The cylinder block **100** is made of an aluminum alloy which contains Si, or more specifically, an aluminum-silicon alloy having a hypereutectic composition.

As shown in FIG. **1****,** the cylinder block **100** includes: a wall portion (referred to as a "cylinder bore wall") **103** defining a cylinder bore **102;** and a wall portion (referred to as a "cylinder block outer wall") **104** that surrounds the cylinder bore wall **103** to define an outline of the cylinder block **100.** Between the cylinder bore wall **103** and the cylinder block outer wall **104,** a water jacket **105** for retaining a coolant is provided.

A surface **101** of the cylinder bore wall **103** facing the cylinder bore **102** defines a slide surface that comes in contact with a piston. The slide surface **101** is shown enlarged in FIG. **2.** FIG. **2** **is** a plan view schematically showing the slide surface **101.**

As shown in FIG. **2****,** the cylinder block **100** includes a plurality of silicon crystal grains **1** and **2** and an intermetallic compound **4** on the slide surface **101.** These silicon crystal grains **1** and **2** and the intermetallic compound **4** are present, in a dispersed manner, in a matrix (alloy base metal) **3** of solid solution which contains aluminum.

The silicon crystal grains which are the first to crystallize out when a melt of an aluminum-silicon alloy having a hypereutectic composition is cooled are referred to as "primary-crystal silicon grains". The silicon crystal grains which then crystallize out are referred to as "eutectic silicon grains". Among the silicon crystal grains **1** and **2** shown in FIG. **2****,** the relatively large silicon crystal grains **1** are the primary-crystal silicon grains. The relatively small silicon crystal grains **2** present between the primary-crystal silicon grains are the eutectic silicon grains. The intermetallic compound **4** includes matter that crystallizes when the melt is cooled and matter that forms through a heat treatment.

Because the slide surface **101** has the above structure, the cylinder block **100** can have excellent abrasion resistance.

The inventor has conducted studies concerning the use of a recycled material in producing a cylinder block that is made of an aluminum-silicon alloy having a hypereutectic composition to find that using a recycled material may result in a reduced seizure resistance of the cylinder block. Through further studies, the inventor has found that seizure is ascribable to an intermetallic compound that contains Ni (nickel). The claimed invention is based on this finding by the inventor.

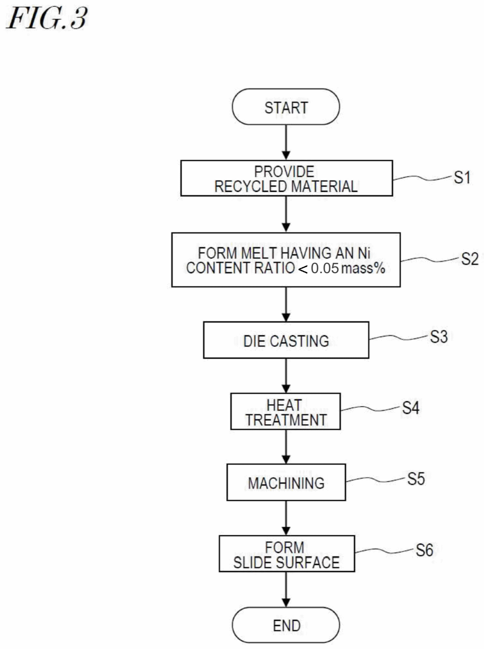

Hereinafter, with reference to FIG. **3****,** a method for producing a cylinder block according to an embodiment of the present invention will be described. FIG. **3** is a flowchart of the production method according to an embodiment of the present invention.

First, a recycled material of an aluminum alloy containing Si is provided (step **S1**). This aluminum alloy is an aluminum-silicon alloy having a hypereutectic composition, with an Si content ratio of, specifically, not less than 12 mass% and not more than 20 mass% (more preferably, not less than 16 mass% and not more than 18 mass%).

Next, by using the recycled material which was provided in step **S1** as at least a portion of a raw material, a melt is formed (step **S2**). The melt obtained in step **S2** has an Ni content ratio which is not more than a predetermined value, specifically, less than 0.05 mass%. The melt formation is carried out by melting the raw material through heating in a melting furnace. As the raw material, the recycled material may exclusively be used (i.e., all of the raw material may be the recycled material), or a combination of the recycled material and a virgin material may be used. Exclusive use of the recycled material as the raw material can further promote utilization of the recycled material.

Next, die casting is performed by using the resultant melt (step **S3**). In other words, the melt is cooled within a die at a high speed and a high pressure to form a molding. At this time, the neighborhood of the slide surface is cooled at a large cooling rate (e.g., not less than 4°C/sec and not more than 400°C/sec), whereby a molding is obtained which includes silicon crystal grains that contribute to abrasion resistance near its surface. This step **S3** can be performed by using, for example, a casting apparatus which is disclosed in Patent Document 1.

Next, the molding which has been taken out of the die is subjected to one of the heat treatments commonly known as "T5", "T6", and "T7" (step **S4**). A T5 treatment is a treatment in which the molding is rapidly cooled (with water or the like) immediately after being taken out of the die, and thereafter subjected to artificial aging at a predetermined temperature for a predetermined period of time to obtain improved mechanical properties and dimensional stability, followed by air cooling. A T6 treatment is a treatment in which the molding is subjected to a solution treatment at a predetermined temperature for a predetermined period after being taken out of the die, then cooled with water, and thereafter subjected to artificial aging at a predetermined temperature for a predetermined period of time, followed by air cooling. A T7 treatment is a treatment for causing a stronger degree of aging than in the T6 treatment; although the T7 treatment can ensure better dimensional stability than does the T6 treatment, the resultant hardness will be lower than that obtained from the T6 treatment.

Next, predetermined machining is performed for the molding (step **S5**). Specifically, a surface abutting with a cylinder head and a surface abutting with a crankcase are subjected to grinding or the like.

Thereafter, the inner surface of the portion of the molding to become the cylinder bore wall (i.e., the surface to become the slide surface) is subjected to a process for forming the slide surface (step **S6**), e.g., a fine boring process, a honing process, etching, etc.

As mentioned above, the production method according to an embodiment of the present invention includes step **S2** of obtaining a melt by using a recycled material of an aluminum alloy containing not less than 12 mass% and not more than 20 mass% of Si as at least a portion of the raw material. The melt obtained in this step **S2** has an Ni content ratio of less than 0.05 mass%. As has already been described, seizure is ascribable to an intermetallic compound that contains Ni. Because the melt has an Ni content ratio of less than 0.05 mass%, generation of an intermetallic compound that contains Ni within the produced cylinder block is suppressed, whereby deteriorations in the seizure resistance of the cylinder block are suppressed.

From the standpoint of suppressing deteriorations in seizure resistance, it is more preferable that the melt obtained in step **S2** has a Zn (zinc) content ratio of not more than 0.3 mass%. Influences of Zn on seizure will be described later.

For example, at step **S1**, a recycled material having an Ni content ratio of less than 0.05 mass% may be provided, thereby making it easy for the melt obtained in step **S2** to have an Ni content ratio of less than 0.05 mass%.

From the standpoint of suppressing deteriorations in seizure resistance, the melt obtained in step **S2** has an Ni content ratio less than 0.05 mass%. Because the melt has an Ni content ratio less than 0.05 mass%, deteriorations in seizure resistance can be better suppressed.

Although there are no particular limitations as to the content ratios of any components of the melt obtained in step **S2** other than Si and Ni, an improved strength after the heat treatment can be obtained if the melt contains Cu (copper). The melt may have a Cu content ratio of not less than 3.0 mass% and not more than 5.0 mass%, for example.

Now, results of a study on how the use of a recycled material may affect seizure resistance will be described.

First, a cylinder block of Prototype Example 1 was produced by using a virgin material having a chemical composition shown in Table 1, and a cylinder block of Prototype Example 2 was produced by using a recycled material having a chemical composition shown in Table 1.

**[Table 1]**

| | | virgin material | recycled material |
|---|---|---|---|
| | Si | 17 | 17 |
| | Cu | 3.0 - 5.0 | 3.0 - 5.0 |
| | Fe | 0.5-1.1 | 0.5-1.1 |
| chemical composition [ mass% ] | Mg | 0.2 - 0.6 | 0.2 - 0.6 |
| | Zn | ≦0.03 | ≦1.0 |
| | Mn | ≦0.03 | ≦0.5 |
| | Ni | ≦0.03 | ≦0.5 |
| | Sn | ≦0.03 | ≦0.1 |
| | P | 0.01 - 0.02 | 0.01 - 0.02 |
| | others | ≦0.03 | ≦0.03 |

Next, with a scanning electron microscope (SEM) and a wavelength dispersive X-ray spectrometry (EPMA), the metallurgical structures of Prototype Examples 1 and 2 were observed. While an intermetallic compound of Al, Cu, and Ni (considered to be Al₇Cu₄Ni, which hereinafter may be referred to as an "AlCuNi compound") was observed in Prototype Example 2, no such intermetallic compound was observed in Prototype Example 1.

Then, Prototype Examples 1 and 2 were subjected to a reciprocal sliding test (SRV test) to evaluate their seizure characteristics. The test conditions were as shown below, and five evaluations were made for each of Prototype Examples 1 and 2.
sliding counterpart: a barrel-shaped Fe test piece with an Sn-plated surface
stroke: 2000 µm
frequency: 10 Hz
heater temperature: 175°C
oil: 10 W-40 2500 µl (immersed)
breaking-in time (constantly at 50 N): 1 minute
load: 600 N
test time: until seizure occurred (30 minutes maximum)

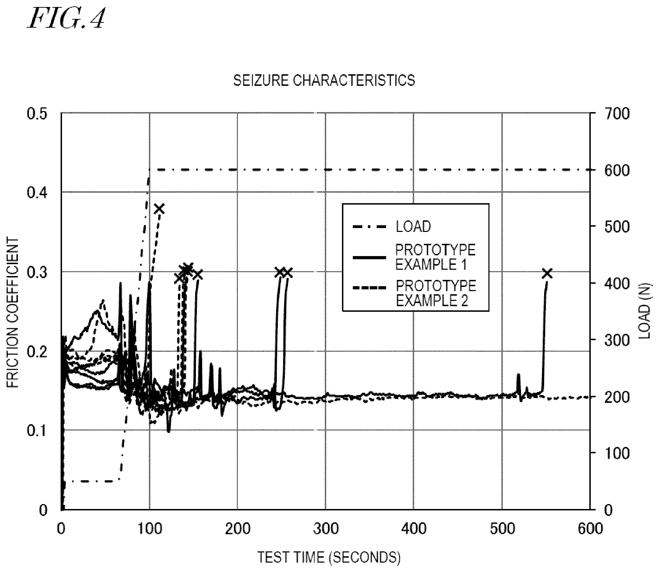

The evaluation results of seizure characteristics are shown in FIG. **4****.** In FIG. **4****,** an "×" symbolizes occurrence of seizure. As shown in FIG. **4****,** a clear difference existed between Prototype Example 1 and Prototype Example 2 regarding the time until the occurrence of seizure. Specifically, the time until the occurrence of seizure was shorter in Prototype Example 2 than in Prototype Example 1.

Next, for Prototype Examples 1 and 2, the aforementioned SRV test was stopped immediately before the occurrence of seizure, and the surface of the sliding counterpart was observed. While Prototype Example 1 showed hardly any deposit on the sliding counterpart, Prototype Example 2 had some deposit on the sliding counterpart. The deposit in Prototype Example 2 was subjected to a component analysis ("chemical composition of deposit"), as shown in Table 2. Regarding the chemical composition of the deposit and the chemical composition of the recycled material (as the raw material for Prototype Example 2), the amounts of other elements were calculated against the amount of Al being defined as 100, as shown in Table 3.

**[Table 2]**

| chemical composition of deposit [ mass% ] | | | | | | | | | | | | | |
|---|---|---|---|---|---|---|---|---|---|---|---|---|---|
| Al | Si | Cu | Fe | Mg | Zn | Mn | Ni | Sn | Ca | P | C | O | S |
| 51.36 | 11.58 | 4.70 | 10.95 | 0.37 | 0.93 | 0.36 | 0.74 | 6.10 | 0.36 | 0.50 | 6.82 | 4.62 | 0.62 |

**[Table 3]**

| | Al | Si | Cu | Fe | Mg | Zn | Mn | Ni | Sn | Ca |
|---|---|---|---|---|---|---|---|---|---|---|
| deposit | 100.0 | 22.5 | **9.2** | 21.3 | 0.7 | 1.8 | 0.7 | **1.4** | 11.9 | 0.7 |
| recycled material | 100.0 | 22.6 | 6.0 | 1.1 | 0.5 | 1.3 | 0.7 | 0.7 | 0.1 | 0.0 |

It can be seen from Table 2 and Table 3 that the deposit composition had more Ni and Cu than did the composition of the recycled material (i.e., the original composition). This is presumably the influence of an AlCuNi compound having been formed in the cylinder block of Prototype Example 2.

Next, regarding the virgin material and the recycled material, thermodynamic calculation software (product name: Thermo-Calc) was used to calculate the proportion of their liquid phase near the melting point (specifically, 500 to 600°C), and their respective liquid phase compositions were calculated. The respective compositions shown in Table 4 were used for the virgin material and the recycled material in the calculations. As shown in Table 4, the content ratios of Zn, Mn, Ni, and Sn were different between the virgin material and the recycled material.

**[Table 4]**

| | | virgin material | recycled material |
|---|---|---|---|
| | Si | 17.0 | 17.0 |
| | Cu | 4.5 | 4.5 |
| | Fe | 0.8 | 0.8 |
| | Mg | 0.4 | 0.4 |
| chemical composition [ mass% ] | **Zn** | **0.03** | **1.0** |
| | **Mn** | **0.03** | **0.50** |
| | **Ni** | **0.03** | **0.50** |
| | **Sn** | **0.03** | **0.10** |
| | P | 0.01 | 0.01 |
| | Ca | 0.005 | 0.005 |

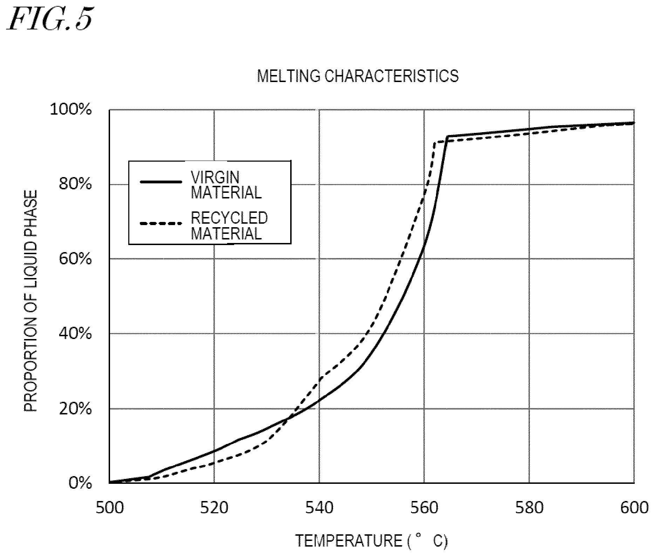

FIG. **5** shows calculation results of the proportion of the liquid phase in the virgin material and the recycled material. It can be seen from FIG. **5** that the melting characteristics differ between the virgin material and the recycled material. Specifically, at relatively low temperatures, the proportion of the liquid phase is higher in the virgin material than in the recycled material; at 530 to 540°C, however, the trends in the proportion of the liquid phase are reversed. At 540 to 560°C, the proportion of the liquid phase is 5 to 10% higher in the recycled material than in the virgin material. It is presumably because of such difference in melting characteristics that the time until the occurrence of seizure was shorter in the aforementioned Prototype Example 2.

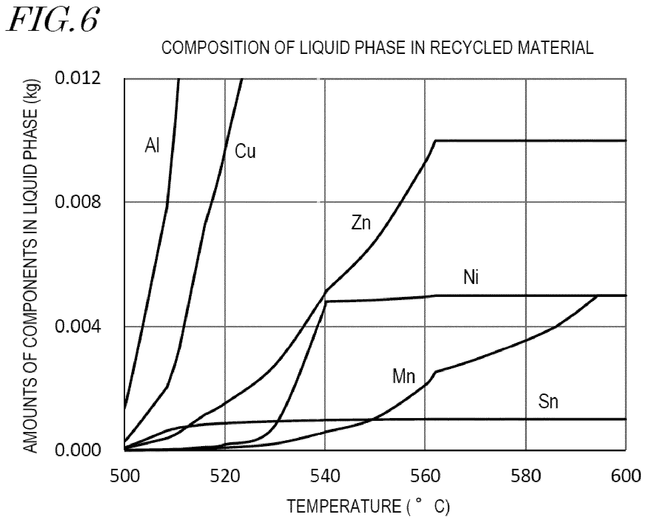

FIG. **6** shows calculation results of the composition of the liquid phase in the recycled material. FIG. **6** shows amounts of Al, Cu, Zn, Mn, Ni, and Sn against a total amount of 1.0 kg. It is deduced from FIG. **6** that the reversal of the trends in the proportion of the liquid phase at 530 to 540°C is ascribable to the melting of Ni (i.e., melting of the intermetallic compound that contains Ni). It also appears that melting of Zn has some contribution as well.

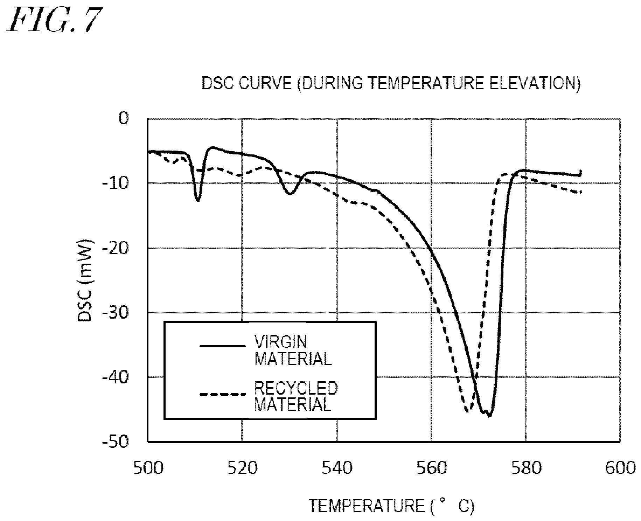

Next, regarding the virgin material and the recycled material having the compositions shown in Table 4, a differential scanning calorimetry (DSC) was conducted in order to examine whether their melting characteristics were actually different or not. FIG. 7 shows DSC curves during temperature elevation.

It can be seen from FIG. 7 that a difference in melting characteristics between the virgin material and the recycled material emerges near 530 to 540°C, such that the recycled material has its peak on the lower temperature side than does the virgin material. Thus, the evaluation results of the actual melting characteristics of the virgin material and the recycled material were substantially consistent with the calculation results by the thermodynamic calculation software.

As described above, it was confirmed that the virgin material and the recycled material have different melting characteristics. As has already been described, the differing melting characteristics are ascribable to the presence or absence of a generated AlCuNi compound, and such differing melting characteristics are presumably the cause for the differing seizure characteristics.

As described above, in the production method according to an embodiment of the present invention, because the melt obtained in step **S2** has an Ni content ratio of less than 0.05 mass%, generation of an AlCuNi compound in the produced cylinder block is suppressed, whereby deteriorations in the seizure resistance of the cylinder block are suppressed. From the standpoint of suppressing deteriorations in seizure resistance, the melt obtained in step **S2** has an Ni content ratio less than 0.05 mass%.

Moreover, as has been described with reference to FIG. **6****,** melting of Zn apparently has some contribution to the differing melting characteristics as well; therefore, from the standpoint of suppressing deteriorations in seizure resistance, it may be more preferable that the melt obtained in step **S2** has a Zn content ratio of not more than 0.3 mass%.

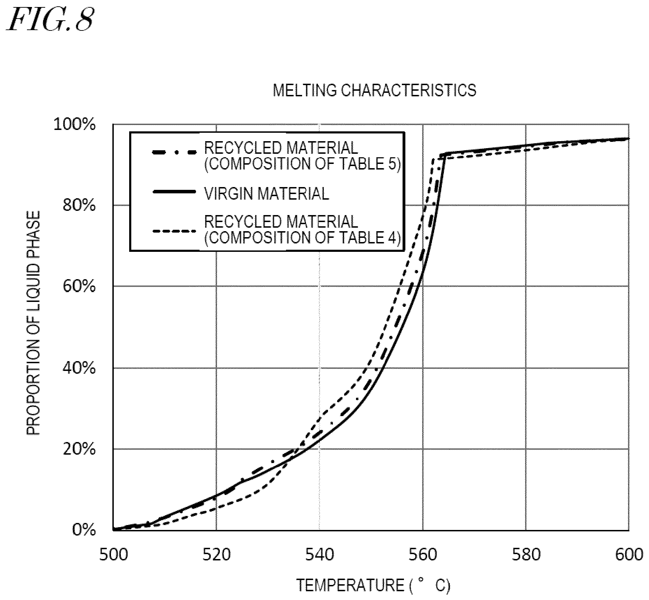

Fig. 8 is not covered by the subject-matter of the claims but is considered useful for understanding the invention. FIG. **8** shows results of using thermodynamic calculation software (product name: Thermo-Calc) to calculate the proportion of the liquid phase in a recycled material having a composition shown in Table 5 (with an Ni content ratio of 0.1 mass% and a Zn content ratio of 0.3 mass%), near the melting point (specifically, 500 to 600°C). FIG. **8** also shows calculation results for the virgin material and the recycled material of the compositions shown in Table 4.

**[Table 5]**

| | | recycled material |
|---|---|---|
| | Si | 17.0 |
| | Cu | 4.5 |
| | Fe | 0.8 |
| | Mg | 0.4 |
| chemical composition [ mass% ] | **Zn** | **0.3** |
| | **Mn** | **0.3** |
| | **Ni** | **0.1** |
| | **Sn** | **0.1** |
| | P | 0.01 |
| | Ca | 0.005 |

It can be seen from FIG. **8** that the recycled material having the composition shown in Table 5 has melting characteristics similar to those of the virgin material.

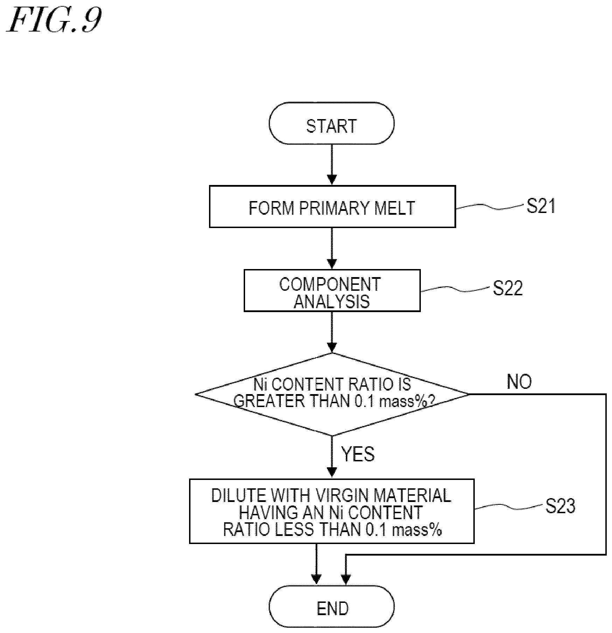

Fig. 9 is not covered by the subject-matter of the claims but is considered useful for understanding the invention. With reference to FIG. **9****,** another implementation of step **S2** of obtaining a melt will be described. Step **S2** of obtaining a melt may include steps **S21, S22** and **S23** as shown in FIG. **9****.**

In the example shown in FIG. **9****,** first, at least the recycled material is melted to obtain a primary melt (step **S21).** As the raw material, only the recycled material may be used (i.e., all of the raw material may be the recycled material), or the recycled material and a virgin material may be used in combination.

Next, the primary melt is subjected to a component analysis (step **S22).** As the method of component analysis, various known methods can be used, e.g., emission spectroscopy.

When the primary melt has an Ni content ratio greater than 0.1 mass%, the primary melt is diluted with a virgin material of an aluminum alloy having an Ni content ratio less than 0.1 mass% (step **S23).** This results in the finally-obtained melt having an Ni content ratio of not more than 0.1 mass%. When the primary melt has an Ni content ratio of not more than 0.1 mass%, the primary melt will straightforwardly be the final melt. Note that step **S23** may be followed by a component analysis of the diluted melt.

Thus, step **S2** may include step **S21** of obtaining a primary melt and step **S22** of subjecting the primary melt to a component analysis. This allows for determining whether the Ni content ratio in the primary melt is not more than 0.1 mass%, thereby making it easier to keep the Ni content ratio in the finally-obtained melt under control at step **S2.**

As is illustrated herein, step **S2** may further include step **S23** of, when the primary melt has an Ni content ratio greater than 0.1 mass%, diluting the primary melt with a virgin material having an Ni content ratio less than 0.1 mass%. Performing such step **S23** will allow the finally-obtained melt in step **S2** to have a lower Ni content ratio; therefore, even if the primary melt has an Ni content ratio greater than 0.1 mass%, the Ni content ratio in the finally-obtained melt can be not more than 0.1 mass%.

As has already been described, the Si content ratio and the Ni content ratio in the melt obtained in step **S2** are not less than 12 mass% and not more than 20 mass% (preferably, not less than 16 mass% and not more than 18 mass%) and less than 0.05 mass%, respectively. Preferably, the melt obtained in step **S2** has a Zn content ratio of not more than 0.3 mass%. Although there are no limitations as to the other components in the melt obtained in step **S2,** the melt obtained in step **S2** may suitably have an exemplary composition as shown in Table 6.

**[Table 6]**

| | | |
|---|---|---|
| | Si | not less than 12 mass% and not more than 20 mass% |
| | Cu | not less than 3.0 mass% and not more than 5.0 mass% |
| chemical composition | Fe | not less than 0.5 mass% and not more than 1.1 mass% |
| | Mg | not less than 0.2 mass% and not more than 0.6 mass% |
| | Zn | not less than 0 mass% and not more than 0.3 mass% |
| | Mn | not less than 0 mass% and not more than 0.3 mass% |
| | Ni | not less than 0 mass% and less than 0.05 mass% |
| | Sn | not less than 0 mass% and not more than 0.1 mass% |
| | P | not less than 0.005 mass% and not more than 0.02 mass% |
| | Ca | not less than 0 mass% and not more than 0.01 mass% |
| | remaining parts are Al and inevitable impurities | |

According to the present invention, deteriorations in the seizure resistance of an aluminum-alloy cylinder block that is produced by using a recycled material are suppressed. A cylinder block that is produced by the production method according to an embodiment of the present invention is suitably used for an internal combustion engine of various types of transportation apparatuses such as motorcycles, for example.

## Claims

1. A method for producing an aluminum-alloy cylinder block (100), the method comprising:
step A of providing a recycled material of an aluminum alloy containing not less than 12 mass% and not more than 20 mass% of Si;
step B of obtaining a melt having an Ni content ratio of less than 0.05 mass% by using the recycled material as at least a portion of a raw material; and
step C of performing die casting by using the melt.

2. The method of claim 1, wherein the melt obtained in step B has a Zn content ratio of not more than 0.3 mass%.

3. The method of claim 1 or 2, wherein the recycled material provided in step A has an Ni content ratio of not more than 0.1 mass%.

4. The method of any of claims 1 to 3, wherein the melt obtained in step B has a Cu content ratio of not less than 3.0 mass% and not more than 5.0 mass%.

5. The method of any of claims 1 to 4, wherein step B comprises:
step b1 of melting at least the recycled material to obtain a primary melt; and
step b2 of subjecting the primary melt to a component analysis.

## Patentansprüche

1. Verfahren zur Herstellung eines Zylinderblocks (100) aus einer Aluminiumlegierung, das Verfahren umfassend:
Schritt A, bei dem ein recyceltes Material aus einer Aluminiumlegierung bereitgestellt wird, das mindestens 12 Massenprozent und höchstens 20 Massenprozent Si enthält;
Schritt B, bei dem eine Schmelze mit einem Ni-Gehalt von weniger als 0,05 Massenprozent erhalten wird, indem das recycelte Material als mindestens ein Teil eines Rohmaterials verwendet wird; und
Schritt C, bei dem unter Verwendung der Schmelze ein Druckgussverfahren durchgeführt wird.

2. Verfahren nach Anspruch 1, wobei die in Schritt B erhaltene Schmelze einen Zn-Gehalt von höchstens 0,3 Massenprozent aufweist.

3. Verfahren nach Anspruch 1 oder 2, wobei das in Schritt A bereitgestellte recycelte Material einen Ni-Gehalt von höchstens 0,1 Massenprozent aufweist.

4. Verfahren nach einem der Ansprüche 1 bis 3, wobei die in Schritt B erhaltene Schmelze einen Cu-Gehalt von mindestens 3,0 Massenprozent und höchstens 5,0 Massenprozent aufweist.

5. Verfahren nach einem der Ansprüche 1 bis 4, wobei Schritt B umfasst:
Schritt b1 des Schmelzens von mindestens des recycelten Materials, um eine Primärschmelze zu erhalten; und
Schritt b2 des Unterziehens der Primärschmelze einer Komponentenanalyse.

## Revendications

1. Procédé de production d'un bloc-moteur en alliage d'aluminium (100), le procédé comprenant :
une étape A consistant à fournir un matériau recyclé d'un alliage d'aluminium contenant au moins 12 % en masse et au plus 20 % en masse de Si ;
une étape B consistant à obtenir un matériau fondu ayant une teneur en Ni inférieure à 0,05 % en masse en utilisant comme matière première au moins une portion du matériau recyclé ; et
une étape C consistant à réaliser un moulage sous pression en utilisant le matériau fondu.

2. Procédé selon la revendication 1, dans lequel le matériau fondu obtenu à l'étape B présente une teneur en Zn d'au plus 0,3 % en masse.

3. Procédé selon la revendication 1 ou 2, dans lequel le matériau recyclé fourni à l'étape A présente une teneur en Ni d'au plus 0,1 % en masse.

4. Procédé selon l'une quelconque des revendications 1 à 3, dans lequel le matériau fondu obtenu à l'étape B présente une teneur en Cu d'au moins 3,0 % en masse et d'au plus 5,0 % en masse.

5. Procédé selon l'une quelconque des revendications 1 à 4, dans lequel l'étape B comprend :
une étape b1 de fusion au moins du matériau recyclé pour obtenir un matériau fondu primaire ; et
une étape b2 de soumission du matériau fondu primaire à une analyse des composants.
